# EUROPÄISCHE PATENTSCHRIFT

(11) **EP 1 716 955 B1**
(45) Veröffentlichungstag und Bekanntmachung des Hinweises auf die Patenterteilung: **07.03.2012**
(21) Anmeldenummer: 06090059.4
(22) Anmeldetag: 25.04.2006
(51) Int. Cl.: B27B 5/18, B23D 45/06

(54) **Sägevorrichtung mit einer Blockiervorrichtung**
Sawing device with a blocking device
Dispositif de sciage avec un dispositif de blocage

(30) Priorität: 27.04.2005 DE 102005020338
(43) Veröffentlichungstag der Anmeldung: 02.11.2006
(73) Patentinhaber: Raimann Holzoptimierung GmbH & Co. KG, 79108 Freiburg (DE)
(72) Erfinder: Linser, Ralf, 79232 March-Holzhausen (DE)
(74) Vertreter: Gross, Felix

(56) Entgegenhaltungen:
- DE-A1- 2 063 757
- DE-U1- 7 923 659
- DE-U1- 9 006 043
- DE-U1- 20 007 037

## Beschreibung

Die Erfindung betrifft eine Sägevorrichtung nach dem Oberbegriff des Anspruchs 1 und eine Längskreissäge enthaltend eine solche Sägevorrichtung nach Anspruch 11. Eine solche Vorrichtung ist aus EP1362676A1 bekannt.

Bei bekannten Sägevorrichtungen gibt es immer wieder Probleme, wenn das Sägegut fest auf einer

Lagerungsvorrichtung angeordnet ist, die Säge aber mit beweglichem Vorschub darunter. Die Säge wird bei einer solchen Anordnung unterhalb des Sägegutes in einer Schnittfuge in Vorschubrichtung durch einen Schlitten bewegt, so dass der Sägeabfall nach unten in die Schnittfuge fällt.

Diese Probleme treten z.B. beim Längsschnittkreissägen sehr schmaler Holzleisten oder sehr schmaler Anschnitte bei schon besäumtem Material oder Hölzern mit Waldkante auf. Auch können die Probleme auf einer Längsschnittkreissäge sowohl bei der Massivholzbearbeitung als auch beim Schneiden von Plattenmaterial aus Holz oder anderen Werkstoffen, wie Kunststoffe, Aluminium, Verbundstoffe, oder aber duch Spannplatten oder MDF auftreten.

Bei solchen Sägevorrichtungen wird zur Fixierung auf dem Maschinentisch das Sägegut per Hand oder Anschlag auf dem Maschinentisch fixiert oder durch Maschinenelemente wie z.B. einem Niederhalter oder durch einen Druckbalken in der gewünschten Position gehalten.

Dabei weist die Sägevorrichtung z.B. einen vorderen und einen hinteren Maschinentisch auf, auf dem das Sägegut angeordnet wird. Unterhalb ist ein so genannter Rollschemel (Sägewagen mit Sägenantrieb und der Sägewellenlagerung mit Sägeblattaufnahme sowie der Hebe- und Senkeinheit für das Sägeblatt) angeordnet, welcher beim Sägen in gehobener Stellung und beim Zurückfahren in Ausgangsstellung bzw. abgesenkter Stellung in Längsrichtung verfährt.

Auf diesen beiden Maschinentischen ist im Schnittbereich, meist in der Mitte, eine so genannte Schnittfugenleiste und die Schnittfuge angeordnet, in der sich das Sägeblatt (Werkzeug) in Vorschubrichtung bewegt.

Bei dieser bekannten Anordnung können Anschnitte oder sonstiger Abfall durch die Sägefuge in den Bereich vor und hinter dem Sägeblatt fallen, dabei werden sie dann meist bei der Rückwärtsbewegung von dem Sägeblatt erfasst und nach vorne geschleudert, was zu Verletzungen des Maschinenbedieners führen kann.

Aus der gatttungsbildenden DE 2 063 757 A ist eine Sägevorrichtung bekannt, wobei die Fahrbahn eines Sägeblatts der Sägevorrichtung von einem Spänekasten umgeben ist.

Aus der DE 90 06 043 U1 ist eine in Form eines Gurtes ausgebildete Überschlagssicherung für eine Pendelsäge bekannt, wobei der Gurt auch eine Schnittfuge überdeckt.

Darüber hinaus ist aus der DE 20009 611 U1 eine Sägevorrichtung mit einem verschiebbar an einem Sägeblatt montierten Blockierelement bekannt.

Der vorliegenden Erfindung liegt die Aufgabe zugrunde, eine Vorrichtung zu schaffen, bei der insbesondere dieser Nachteil vermieden wird.

Diese Aufgabe wird erfindungsgemäß durch eine Sägevorrichtung mit den Merkmalen des Anspruchs 1 gelöst.

Dadurch, dass mindestens ein Verschlussmittel zum zumindest teilweisen Verschließen mindestens einer Schnittfuge vorgesehen ist, wird es erheblich erschwert, dass unerwünschter Sägeabfall in die Schnittfuge fällt. Das teilweise Verschließen erfolgt dabei in dem Bereich, der von der Säge gerade nicht eingenommen wird, denn das mindestens eine Verschlussmittel ist beweglich ausgebildet und die Bewegung des Verschlussmittels relativ zur Schnittfuge ist an die Position mindestens eines Sägeblattes in der Schnittfuge gekoppelt.

Dabei ist es vorteilhaft, wenn mindestens ein Verschlussmittel in Längsrichtung der Schnittfuge beweglich angeordnet ist. Bei einer solchen Ausbildung kann ein einziges Element größere Bereiche einer länglichen Schnittfuge abdecken.

Es ist aber auch vorteilhaft, wenn mindestens ein Verschlussmittel quer zur Schnittfuge beweglich angeordnet ist. Die Verschlussmittel können hier kleiner ausgebildet werden und die Wege, die die Verschlussmittel bewegt werden müssen sind klein, da die Quererstreckung der Schnittfuge klein gegenüber der Längserstreckung ist.

Das aufwickelbare Band ist besonders gut geeignet, um eine längliche Schnittfuge abzudecken. Dabei ist es besonders vorteilhaft, wenn das aufwickelbare Band des Verschlussmittels mit einem Schlitten für die Vorschubbewegung mindestens eines Sägeblattes gekoppelt ist, wobei bei der Bewegung des mindestens einen Sägeblattes das Verschlussmittel automatisch von einer Wickelvorrichtung abrollbar oder aufrollbar ist.

Eine vorteilhafte Verwendung der erfindungsgemäßen Sägevorrichtung ergibt sich, wenn sie einen vorderen Maschinentisch und einem hinteren Maschinentisch mit jeweils mindestens einer Schnittfuge aufweist. Bei solchen langen Schnittfugen ist eine besondere effiziente Abdeckung von großer Bedeutung.

Auch ist es vorteilhaft, wenn mindestens eine Schnittfuge in einer Schnittfugenleiste angeordnet ist.

Vorteilhafte Materialien für mindestens eine Schnittfugenleiste sind Holz, Aluminium, Verbundwerkstoff, Kunststoff, insbesondere Pertinax, Hartholz oder Panzerholz.

Zur Minimierung von Beschädigungen des Sägegutes ist es vorteilhaft, wenn Abstand zwischen dem mindestens einen Sägeblatt und dem Rand der dem Sägeblatt zugeordneten Schnittfuge minimal ist.

Ferner ist es vorteilhaft, wenn mindestens ein Mittel zum automatischen Entfernen des Sägeabfalls vom Verschlussmittel vorgesehen ist. Damit ist das gezielte Entfernen des Sägeabfalls möglich. Vorzugsweise ist das Mittel zum automatischen Entfernen des Sägeabfalls vom Verschlussmittel als Gebläse ausgebildet und / oder weist Bürsten auf.

Die Aufgabe wird auch durch eine Längskreissäge, insbesondere für Holz, einen Holzverbundwerkstoff, Kunststoff oder Metall, mit einer Sägevorrichtung nach mindestens einem der Ansprüche 1 bis 10 gelöst.

Die Erfindung wird nachfolgend unter Bezugnahme auf die Figuren der Zeichnungen an mehreren Ausführungsbeispielen näher erläutert. Es zeigen:
Fig. 1 perspektivische Ansicht eines Teils einer Längskreissäge;
Fig. 2 perspektivische Ansicht einer Schnittfuge mit einer Ausführungsform eines erfindungsgemäßen Blockiermittels;
Fig. 3 schematische Draufsicht auf eine Ausführungsform einer Längskreissäge.

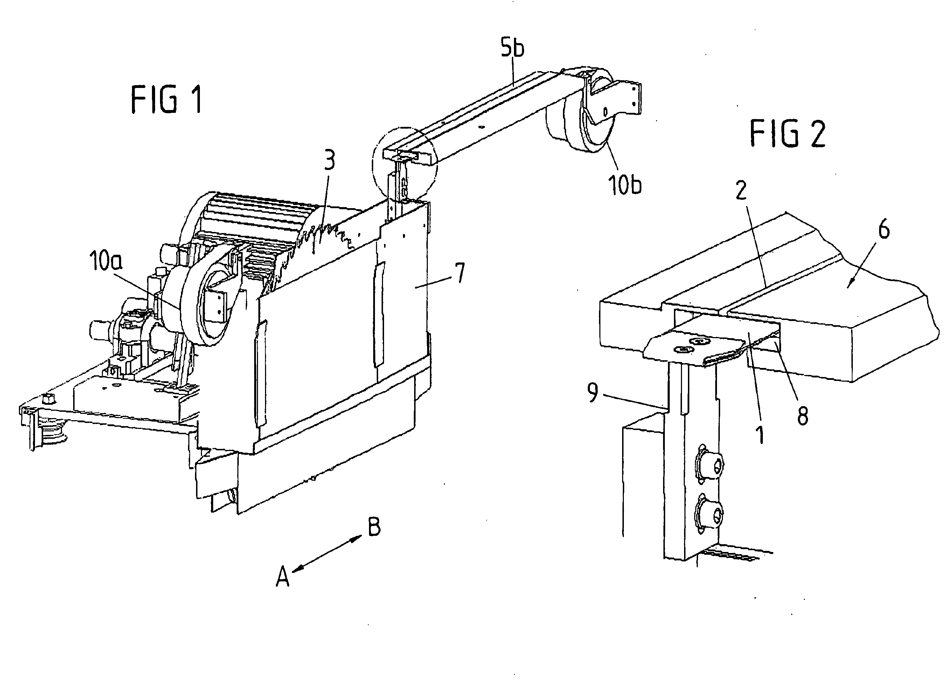

In Fig. 1 ist ein Teil einer Längskreissäge 20 perspektivisch dargestellt.

Ein Sägeblatt 3 der Längskreissäge ist dabei an einem Schlitten 7 (auch als Rollschemel bezeichnet) angeordnet. Der Schlitten 7 mit dem Sägeblatt 3 kann in der Richtung des Pfeils A-B vor und zurück bewegt werden.

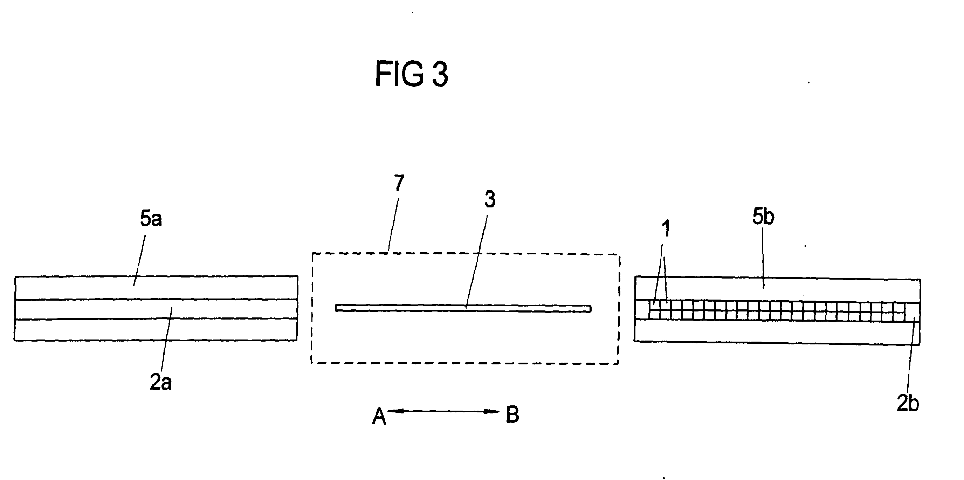

Das zu sägende Gut, hier Holz, wird in einer hier aus Gründen der Übersicht nicht dargestellten Weise auf Maschinentischen 5a, 5b angeordnet. Hier ist nur der hintere Maschinentisch 5b dargestellt, der vordere Maschinentisch 5a liegt in Sägerichtung gesehen auf der anderen Seite des Sägeblattes 3 (siehe auch Draufsicht der Fig. 3).

Die Maschinentische 5a, 5b sind stationär ausgebildet, so dass der Schlitten 7 mit dem Sägeblatt sich relativ zu den Maschinentischen 5a, 5b bewegt. Wenn das Holz gesägt werden soll, wird das Sägeblatt 3 durch eine Schnittfuge 2 (siehe vergrößert in Fig. 2) nach oben geführt, so dass das Sägeblatt 3 in Eingriff mit dem Holz steht und das Sägeblatt der Schnittfuge 2 entlang geführt wird.

Der hintere Maschinentisch 5b weist eine Schnittfugenleiste 6 auf, in die die Schnittfuge 2 integriert ist. In der Schnittfugenleiste 6 ist eine Ausnehmung 8 eingebracht, in der ein bandförmiges Verschlussmittel 1 als Teil einer Blockiervorrichtung angeordnet ist. Das Verschlussmittel ist hier aus einem drahtverstärkten Textil gefertigt. Grundsätzlich können aber für diese Ausführungsform auch andere wickelbare Materialien, wie z.B. Kunststoffbahnen verwendet werden.

Die Ausführungsform der erfindungsgemäßen Blockiervorrichtung soll dazu dienen, dass Sägeabfall in unkontrollierter Weise in das Sägeblatt 3 gerät.

Im Folgenden wird die Funktion der Blockiervorrichtung anhand des hinteren Maschinentischs 5b dargestellt. Eine analoge Blockiervorrichtung findet sich an dem hier nicht dargestellten vorderen Maschinentisch 5a.

Da das Sägeblatt 3 aber beweglich ausgebildet ist, muss die Blockiervorrichtung sich der Bewegung anpassen. In der dargestellten Ausführungsform wird dies dadurch gewährleistet, dass das Verschlussmittel 1 die Schnittfuge 2 immer nur soviel freigibt, wie es notwendig ist. Die Bewegungen von Verschlussmittel 1 und Sägeblatt 3 sind gekoppelt. Die Kopplung findet in dieser Ausführungsform mechanisch statt, indem am Schlitten 7 ein Mitnehmer 9 angeordnet ist. An diesem Mitnehmer 9 ist ein Ende des bandförmigen Verschlussmittels 1 befestigt. Das andere Ende des bandförmigen Verschlussmittels 1 ist in einer hinteren Bandwickelvorrichtung 10b dargestellt, die loses Band automatisch aufnimmt.

Bewegt sich nun der Schlitten 7 mit dem Sägeblatt 3 in Pfeilrichtung B, d.h. in Fig. 1 oder 2 nach hinten, so schiebt der Mitnehmer 9 des Schlittens 7 das bandförmige Verschlussmittel 1 ebenfalls in Richtung B. Die hintere Bandwickelvorrichtung 10b nimmt das Lose des Bands auf und sorgt dafür, dass das Verschlussmittel 1 immer straff in der Ausnehmung 8 liegt.

Gleichzeitig zieht ein hier nicht dargestellter Mitnehmer ein bandförmiges Verschlussmittel 1 des vorderen Maschinentisches 5a in Richtung B. Dazu wird das hier nicht dargestellte analoge Band als Verschlussmittel 1 von einer vorderen Bandwickelvorrichtung 10a abgewickelt.

Die gesamte Blockiervorrichtung weist hier zwei Verschlussmittel 1 auf, die je nach Bewegungsrichtung des Sägeblattes von einer Bandwickelvorrichtung 10a, 10b ab- oder aufgewickelt werden.

Die Schnittfugenleiste 6 kann aus verschiedenen Materialen bestehen, wie z.B. Holz, Alu, Verbundwerkstoffe oder Kunststoffe. (Pertinax, Hartholz, Panzerholz, etc.)

Die Schnittfugenleisten 6 sind dabei als Ersatz- und Verschleißteile ausgebildet und werden bei längerem Gebrauch und unsachgemäßer Behandlung z.B. auf Grund falscher Vorschubgeschwindigkeit in Abhängigkeit von Materialhöhe, Materialart sowie der Ausführung des Sägeblattes bzw. einer Trennscheibe aus z.B. Diamant mit der Zeit verschlissen, d.h. die Schnittfuge 2 wird breiter.

Durch die erfindungsgemäße Blockiervorrichtung mit dem Verschlussmittel 1 können keine größeren Teile in die Maschine fallen. Die anfallenden kleineren Teile in diesem Bereich können auf Grund ihrer Größe aber ungehindert neben dem Sägeblatt 3 in den so genannten Spänetrichter fallen und/oder durch Absaugung aus der Maschine 20 entsorgt werden.

Da durch die Abdeckung keine Anschnitte mehr in das Maschineninnere fallen können, können die Wartungsarbeiten, wie z.B. Entfernen der Spreißel und Säubern der Maschine, in Zukunft mit dieser Maschinenoption entfallen bzw. erheblich reduziert werden. Außerdem können die Spreißel, die in das Innere der Maschine gelangen, zu Zerstörungen von Maschinekomponenten führen.

Der Verschleiß an der Schnittfuge 2 wird ebenfalls verringert, da sich keine längeren Teile zwischen Sägeblatt 3 und Schnittfuge 2 einklemmen können, was zu einer seitlichen Auslenkung des Sägeblattes 3, und damit zu einer Verbreiterung der Schnittfuge 2 führt. Dadurch ist eine längere Standzeit der Schnittfuge 2 möglich.

Auch ist es möglich, dass in der Ausnehmung 8 Mittel zur Beseitigung von Sägeabfall angeordnet sind. Dies können z.B. stationäre Bürstenelemente sein, die längs des Verschlussmittels angeordnet sind. Auch können bewegliche Bürstenelemente oder Luftgebläse verwendet werden, die das Material gezielt entfernen.

Die Ausführung ist so konstruiert, dass an Altmaschinen oder Fremdfabrikaten eine Nachrüstung auch nachträglich möglich ist.

Alternativ kann die Schnittfuge 2 durch Verschlussmittel 1 verschlossen werden, die sich quer zur Schnittfuge 2 in diese hineinbewegen können.

In Fig. 3 ist eine Draufsicht auf eine solche Ausführungsform dargestellt, wobei der Schlitten 7 mit dem Sägeblatt 3 grundsätzlich genauso funktioniert, wie in der oben dargestellten Ausführungsform.

In den Schnittfugenleisten 5a, 5b sind als Verschlussmittel 1 relativ schmale Streifen quer zur Schnittfuge 2 beweglich angeordnet.

Eine andere Alternative ist die Öffnung bzw. Schließung der Schnittfuge 2 durch bewegende Schnittleisten. Dabei wird nur jeweils der Bereich der Schnittfuge 2 geöffnet, in der sich das Sägeblatt 3 befindet, dabei werden die Elemente durch Schuhe aufgedrückt.

Die Erfindung wurde hier anhand einer Holzsäge beschrieben. Grundsätzlich kann die erfindungsgemäße Blockiervorrichtung auch bei Sägen für andere Materialien eingesetzt werden.

### Bezugszeichenliste

- 1: Verschlussmittel für Sägefuge
- 2: Sägefuge
- 3: Sägeblatt
- 5a,b: Maschinentisch
- 6: Schnittfugenleiste
- 7: Schlitten
- 8: Ausnehmung in Schnittfugenleiste
- 9: Mitnehmer an Schnittfugenleiste
- 10a,b: Bandwickelvorrichtung für bandförmiges Verschlussmittel
- 20: Längskreissäge

## Patentansprüche

1. Sägevorrichtung mit mindestens einem Maschinentisch zum Anordnen eines Sägeguts, wobei mindestens ein Sägeblatt relativ zu dem mindestens einen Maschinentisch in einer Schnittfuge in dem Maschinentisch beweglich angeordnet ist, und wobei das mindestens eine Sägeblatt (3) an einem unterhalb des Maschinentisches befindlichen Schlitten (7) angeordnet ist,
**gekennzeichnet durch**
eine Blockiervorrichtung, die mindestens ein beweglich und in Form eines aufwickelbaren Bandes ausgebildetes Verschlussmittel (1) zum zumindest teilweisen Verschließen der Schnittfuge (2) aufweist, wobei die Bewegung des Verschlussmittels (1) relativ zur Schnittfuge (2) an die Position des mindestens einen Sägeblattes (3) in der Schnittfuge (2) gekoppelt ist.

2. Sägevorrichtung nach Anspruch 1, **dadurch**
**gekennzeichnet , dass** mindestens ein Verschlussmittel (1) in Längsrichtung der Schnittfuge (2) beweglich angeordnet ist.

3. Sägevorrichtung nach Anspruch 1 oder 2, **dadurch gekennzeichnet, dass** mindestens ein Verschlussmittel (1) quer zur Schnittfuge (2) beweglich angeordnet ist.

4. Sägevorrichtung nach einem der vorhergehenden Ansprüche, **dadurch gekennzeichnet , dass** das aufwickelbare Band des Verschlussmittels (1) mit dem Schlitten für die Vorschubbewegung des Sägeblattes (3) gekoppelt ist, wobei bei der Bewegung des mindestens einen Sägeblattes (3) das Verschlussmittel (1) automatisch von einer Wickelvorrichtung (10a, 10b) abrollbar oder aufrollbar ist.

5. Sägevorrichtung nach mindestens einem der vorhergehenden Ansprüche, **gekennzeichnet durch** einen vorderen Maschinentisch (5a) und einem hinteren Maschinentisch (5b) mit jeweils mindestens einer Schnittfuge (2).

6. Sägevorrichtung nach mindestens einem der vorhergehenden Ansprüche, **dadurch gekennzeichnet, dass** mindestens eine Schnittfuge (2) in einer Schnittfugenleiste (6) angeordnet ist.

7. Sägevorrichtung nach Anspruch 6, **dadurch**
**gekennzeichnet , dass** mindestens eine Schnittfugenleiste (6) aus Holz, Aluminium, Verbundwerkstoff, Kunststoff, insbesondere Pertinax, Hartholz oder Panzerholz besteht.

8. Sägevorrichtung nach mindestens einem der vorhergehenden Ansprüche, **dadurch gekennzeichnet, dass** der Abstand zwischen dem mindestens einen Sägeblatt (3) und dem Rand der dem Sägeblatt zugeordneten Schnittfuge (2) minimal ist.

9. Sägevorrichtung nach mindestens einem der vorhergehenden Ansprüche, **gekennzeichnet durch** mindestens ein Mittel zum automatischen Entfernten des Sägeabfalls vom Verschlussmittel (1).

10. Sägevorrichtung nach Anspruch 9, **dadurch gekennzeichnet, dass** das Mittel zum automatischen Entfernen des Sägeabfalls vom Verschlussmittel (1) als Gebläse ausgebildet ist und / oder Bürsten aufweist.

11. Längskreissäge, insbesondere für Holz, Holzverbundwerkstoffe, Kunststoff oder Metall, mit einer Sägevorrichtung gemäß einem der vorhergehenden Ansprüche.

## Claims

1. Sawing device comprising at least one machine table for disposing an item to be sawn, wherein at least one saw blade is arranged such that it can move in relation to the at least one machine table in a kerf in the machine table, and wherein the at least one saw blade (3) is arranged on a carriage (7) located underneath the machine table,
**characterized by**
a blocking device, which has at least one movable closure means (1), which is in the form of a windable strip, for at least partially closing the kerf (2), wherein the movement of the closure means (1) in relation to the kerf (2) is coupled to the position of the at least one saw blade (3) in the kerf (2).

2. Sawing device according to Claim 1, **characterized in that** at least one closure means (1) is arranged such that it can move in the longitudinal direction of the kerf (2).

3. Sawing device according to Claim 1 or 2, **characterized in that** at least one closure means (1) is arranged such that it can move transversely to the kerf (2).

4. Sawing device according to one of the preceding claims, **characterized in that** the windable strip of the closure means (1) is coupled to the carriage for the feed movement of the saw blade (3), wherein the closure means (1) can be automatically unrolled or rolled up by a winding device (10a, 10b) during the movement of the at least one saw blade (3).

5. Sawing device according to at least one of the preceding claims, **characterized by** a front machine table (5a) and a rear machine table (5b) each comprising at least one kerf (2).

6. Sawing device according to at least one of the preceding claims, **characterized in that** at least one kerf (2) is arranged in a kerf strip (6).

7. Sawing device according to Claim 6, **characterized in that** at least one kerf strip (6) consists of wood, aluminium, composite material, plastic, in particular Pertinax, hardwood or Panzerholz.

8. Sawing device according to at least one of the preceding claims, **characterized in that** the distance between the at least one saw blade (3) and the edge of the kerf (2) assigned to the saw blade is minimal.

9. Sawing device according to at least one of the preceding claims, **characterized by** at least one means for automatically removing the sawing waste from the closure means (1).

10. Sawing device according to Claim 9, **characterized in that** the means for automatically removing the sawing waste from the closure means (1) is in the form of a fan and/or has brushes.

11. Longitudinal circular saw, in particular for wood, composite wood materials, plastic or metal, comprising a sawing device according to one of the preceding claims.

## Revendications

1. Dispositif de sciage avec au moins une table de machine pour déposer un produit à scier, dans lequel au moins une lame de scie est disposée de façon mobile par rapport à ladite au moins une table de machine dans une fente de coupe ménagée dans la table de machine, et dans lequel ladite au moins une lame de scie (3) est disposée sur un chariot (7) se trouvant en dessous de la table de machine, **caractérisé par** un dispositif de blocage, qui présente au moins un moyen de fermeture (1) mobile et réalisé sous la forme d'une bande enroulable pour fermer au moins partiellement la fente de coupe (2), dans lequel le mouvement du moyen de fermeture (1) par rapport à la fente de coupe (2) est couplé à la position de ladite au moins une lame de scie (3) dans la fente de coupe (2).

2. Dispositif de sciage selon la revendication 1, **caractérisé en ce qu'**au moins un moyen de fermeture (1) est disposé de façon mobile dans la direction longitudinale de la fente de coupe (2).

3. Dispositif de sciage selon la revendication 1 ou 2, **caractérisé en ce qu'**au moins un moyen de fermeture (1) est disposé de façon mobile transversalement par rapport à la fente de coupe (2).

4. Dispositif de sciage selon l'une quelconque des revendications précédentes, **caractérisé en ce que** la bande enroulable du moyen de fermeture (1) est couplée avec le chariot pour le mouvement d'avance de la lame de scie (3), dans lequel, lors du mouvement de ladite au moins une lame de scie (3), le moyen de fermeture (1) peut se dérouler ou s'enrouler automatiquement sur un dispositif d'enroulement (10a, 10b).

5. Dispositif de sciage selon au moins une des revendications précédentes, **caractérisé par** une table de machine antérieure (5a) et une table de machine postérieure (5b) comportant chacune au moins une fente de coupe (2).

6. Dispositif de sciage selon au moins une des revendications précédentes, **caractérisé en ce qu'**au moins une fente de coupe (2) est disposée dans une barre de fente de coupe (6).

7. Dispositif de sciage selon la revendication 6, **caractérisé en ce qu'**au moins une barre de fente de coupe (6) se compose de bois, d'aluminium, d'un matériau composite, de matière plastique, en particulier de Pertinax, de bois dur ou de contreplaqué blindé.

8. Dispositif de sciage selon au moins une des revendications précédentes, **caractérisé en ce que** la distance entre ladite au moins une lame de scie (3) et le bord de la fente de coupe (2) associée à la lame de scie est minimale.

9. Dispositif de sciage selon au moins une des revendications précédentes, **caractérisé par** au moins un moyen pour l'enlèvement automatique de la sciure du moyen de fermeture (1).

10. Dispositif de sciage selon la revendication 9, **caractérisé en ce que** le moyen pour l'enlèvement automatique de la sciure du moyen de fermeture (1) est réalisé sous la forme d'une soufflante et/ou présente des brosses.

11. Scie circulaire en long, en particulier pour le bois, des matériaux composites dérivés du bois, les matières plastiques ou le métal, comportant un dispositif de sciage selon l'une quelconque des revendications précédentes.
